# EUROPÄISCHE PATENTSCHRIFT

(11) **EP 1 724 510 B1**
(45) Veröffentlichungstag und Bekanntmachung des Hinweises auf die Patenterteilung: **08.10.2008**
(21) Anmeldenummer: 06006475.5
(22) Anmeldetag: 29.03.2006
(51) Int. Cl.: F16L 37/088, F16L 37/14

(54) **Steckkupplung**
Plug-in coupling
Raccord enfichable

(30) Priorität: 18.05.2005 DE 102005023583
(43) Veröffentlichungstag der Anmeldung: 22.11.2006
(73) Patentinhaber: NORMA Germany GmbH, 63277 Maintal (DE)
(72) Erfinder: Bauer, Andreas, 63477 Maintal (DE); Koch, Reiner, 63785 Obernburg (DE)
(74) Vertreter: Knoblauch, Andreas

(56) Entgegenhaltungen:
- DE-A1- 2 444 245
- DE-C1- 4 300 037
- US-A- 1 513 710
- US-A- 2 023 428
- US-A- 4 541 657
- US-A- 4 561 682
- US-A1- 4 471 978

## Beschreibung

Die Erfindung betrifft eine Steckkupplung zum Verbinden zweier Fluidleitungen mit einem Kupplungsbauteil, das eine Öffnung mit einem daran anschließenden Aufnahmekanal aufweist, und einem Kupplungsstutzen, der in den Aufnahmekanal eingesteckt ist und eine von seinem Umfang nach außen vorstehende und eine Verriegelungsfläche bildende Halterippe aufweist, mit der ein Verriegelungsbügel zusammenwirkt, der mindestens einen parallel zur Öffnung federnden Schenkel aufweist.

Derartige Steckkupplungen sind z.B. aus US 4 471 978 A1 und DE 2 444 245 A1 bekannt.

Eine Steckkupplung dient dazu, zwei Fluidleitungen miteinander zu verbinden. An der einen Fluidleitung ist das Kupplungsbauteil befestigt. An der anderen Fluidleitung ist der Kupplungsstutzen befestigt. Zum Verbinden der beiden Fluidleitungen wird dann der Kupplungsstutzen in den Aufnahmekanal des Kupplungsbauteils eingesteckt.

Damit sich diese Verbindung nicht ungewollt lösen kann, weist das Kupplungsbauteil einen Verriegelungsbügel auf. Dieser ist im bekannten Fall als U-förmiger Federbügel aus einem Federdraht ausgebildet. Das Kupplungsbauteil weist seitliche Schlitze auf, so daß der Verriegelungsbügel etwa radial auf das Kupplungsbauteil aufgesteckt werden kann. Die beiden Schenkel des Verriegelungsbügels ragen dann etwas in den freien Querschnitt des Aufnahmekanals hinein. Wenn der Kupplungsstutzen eingesteckt wird, dann werden die beiden Schenkel durch die Halterippe auseinandergespreizt und schnappen nach dem Passieren der Halterippe wieder hinter der Halterippe zusammen, so daß der Kupplungsstutzen nicht mehr axial aus dem Kupplungsbauteil herausgezogen werden kann.

Wenn man die Steckkupplung wieder lösen möchte, dann muß man den Verriegelungsbügel radial aus dem Kupplungsgehäuse herausziehen, so daß die Halterippe von den beiden Schenkeln freikommt. Hierzu muß man entweder an der die beiden Schenkel verbindenden Basis des Verriegelungsbügels angreifen, wozu vielfach ein Werkzeug erforderlich ist. Wenn man auf ein Werkzeug verzichten möchte, dann müssen die beiden Schenkel auf der der Basis gegenüberliegenden Seite so weit aus dem Kupplungsgehäuse vorstehen, daß man durch einen Druck auf diese beiden Schenkel den Verriegelungsbügel so weit verschieben kann, daß man ihn erfassen kann. Eine derartige Ausgestaltung hat aber den Nachteil, daß in erheblichem Maße die Gefahr einer Selbstöffnung besteht.

Der Erfindung liegt die Aufgabe zugrunde, eine Steckkupplung lösbar auszugestalten, ohne ein großes Risiko des Selbstöffnens in Kauf nehmen zu müssen.

Diese Aufgabe wird bei einer Steckkupplung der eingangs genannten Art dadurch gelöst, daß ein Demontageelement verschiebbar im Kupplungsbauteil gelagert ist, das in Öffnungsrichtung auf den Schenkel wirkt.

Man bringt also sozusagen ein Werkzeug im Kupplungsbauteil unter, das man zum Entriegeln des Verriegelungsbügels verwenden kann. Um die Steckkupplung zu entriegeln, muß man von außen lediglich auf das Demontageelement einwirken und es verlagern. Bei dieser Verlagerung wirkt das Demontageelement auf den Verriegelungsbügel ein und verschwenkt oder verbiegt den Schenkel. Dadurch wird der Schenkel außer Eingriff mit der Halterippe gebracht, so daß der Kupplungsstutzen aus dem Kupplungsbauteil herausbewegt werden kann. Die Steckkupplung enthält somit alle zum Verriegeln und zum Lösen der Verriegelung notwendigen Bauteile, so daß keine zusätzlichen Werkzeuge erforderlich sind.

Vorzugsweise ist der Verriegelungsbügel U-förmig mit zwei Schenkeln und einer Basis ausgebildet und das Demontageelement ist in einer Richtung senkrecht zur Basis verschiebbar. Das Demontageelement wirkt dann auf beide Schenkel gleichzeitig. Eine Verlagerung oder Verschiebung des Demontageelements bewirkt dann, daß die beiden Schenkel auseinandergespreizt werden. Durch dieses Spreizen kommen die beiden Schenkel von der Halterippe frei, so daß der Kupplungsstutzen aus dem Kupplungsbauteil herausgezogen werden kann. Zum Entriegeln der Steckkupplung ist also nur ein Druck auf das Demontageelement erforderlich. Ein derartiger Druck läßt sich mit der menschlichen Hand in der Regel erzeugen, so daß man auch zum Betätigen des Demontageelements keine Werkzeuge benötigt.

Vorzugsweise weist das Demontageelement mindestens eine mit dem Schenkel zusammenwirkende Schrägfläche auf. Die Schrägfläche verbessert die Spreizwirkung. Das Demontageelement wirkt dann sozusagen als Keil, mit dem der Schenkel oder die Schenkel auseinandergespreizt werden können.

Hierbei ist besonders bevorzugt, daß der Schenkel einen nach außen abgewinkelten Abschnitt aufweist, auf den das Demontageelement wirkt. Mit einer derartigen Ausgestaltung läßt sich die Spreizwirkung noch verbessern, so daß man keinen übermäßig großen Hub für das Demontageelement benötigt, um die Steckkupplung zu entriegeln. Je kleiner der Hub des Demontageelements ist, desto kleiner kann man auch die Baugröße des Kupplungsbauteils halten. Wenn man beispielsweise einen Winkel von 45° verwendet, unter dem die Schrägfläche und der abgewinkelte Abschnitt des Schenkels zur Bewegungsrichtung des Demontageelements angeordnet sind, dann benötigt man lediglich etwa das 1,4-fache der radialen Erstrekkung der Halterippe als Hub für das Demontageelement, um die Steckkupplung zu entriegeln. Es reicht also aus, wenn der Hub nur wenige Millimeter beträgt.

Bevorzugterweise ist das Demontageelement formschlüssig im Kupplungsbauteil gehalten. Der Formschluß läßt die Bewegung des Demontageelements zur Entriegelung des Verriegelungsbügels zu. Er verhindert aber, daß das Demontageelement aus dem Kupplungsbauteil herausfallen kann.

Hierbei ist bevorzugt, daß das Demontageelement mindestens ein quer zu seiner Bewegungsrichtung federndes Bein aufweist, an dem ein erster Vorsprung angeordnet ist, der mit einem zweiten Vorsprung im Kupplungsbauteil zusammenwirkt. Wenn man nun das Demontageelement in das Kupplungsbauteil hineindrückt, dann entfernen sich die beiden Vorsprünge in Bewegungsrichtung voneinander. Durch die federnde Wirkung des Schenkels wird das Demontageelement wieder zurück nach außen gedrückt, wenn eine von außen wirkende Kraft entfällt. Die Bewegung des Demontageelements nach außen kann sich aber nur solange fortsetzen, bis die beiden Vorsprünge wieder aneinander zur Anlage kommen.

Hierbei ist bevorzugt, daß die beiden Vorsprünge jeweils auf einer Seite eine senkrecht zur Bewegungsrichtung verlaufende Haltefläche und auf der in Bewegungsrichtung gegenüberliegenden Seite eine Abschrägung aufweisen. Dies erleichtert die Montage. Man kann das Demontageelement einfach in das Kupplungsbauteil einsetzen. Dabei wird, wenn die beiden Abschrägungen aneinander gleiten, das Bein radial nach innen gebogen und zwar so lange, bis der erste Vorsprung am zweiten Vorsprung vorbeigetreten ist. Dann rastet der erste Vorsprung hinter dem zweiten Vorsprung ein. Wenn man zwei gegenüberliegende Beine am Demontageelement verwendet, dann wird eine relativ hohe Haltekraft erzeugt, die jedenfalls ohne Einwirkung von außen nicht mehr aufgelöst werden kann.

Hierbei ist bevorzugt, daß das Bein in Axialrichtung des Aufnahmekanals außerhalb eines Bereichs angeordnet ist, in dem der Schenkel angeordnet ist. Der Schenkel und das Bein kollidieren also nicht miteinander. Vielmehr ist sichergestellt, daß trotz des Vorhandenseins des Beins der Schenkel weit genug radial nach außen bewegt werden kann, um von der Halterippe freizukommen.

Vorzugsweise ist das Demontageelement in eine Richtung aus dem Kupplungsbauteil heraus maximal bis in eine Position bewegbar, in der es mit der Außenkontur des Kupplungsbauteils abschließt. Damit wird das Risiko eines Selbstöffnens weiter vermindert. Kräfte, die von außen auf das Kupplungsbauteil einwirken, werden zum größten Teil vom Kupplungsbauteil aufgenommen, ohne daß die Gefahr besteht, daß das Demontageelement eingedrückt wird. Nur wenn man gezielt ausschließlich auf das Demontageelement einwirkt, kann man die Steckkupplung entriegeln.

Bevorzugterweise ist der Verriegelungsbügel formschlüssig im Kupplungsbauteil gehalten. Das Kupplungsbauteil stellt sicher, daß der Verriegelungsbügel der Öffnungskraft des Demontageelements einen ausreichenden Widerstand entgegensetzen kann, so daß der Verriegelungsbügel dann, wenn das Demontageelement auf ihn einwirkt, seine Position im Kupplungsbauteil praktisch nicht verändert, sondern nur der Schenkel aufgespreizt wird, um von der Halterippe freizukommen.

Hierbei ist bevorzugt, daß das Kupplungsbauteil einen Aufnahmeraum für den Verriegelungsbügel aufweist, der auf der dem Demontageelement gegenüberliegenden Seite von einem Gehäuseabschnitt überdeckt ist. Der Gehäuseabschnitt sichert dagegen, daß der Verriegelungsbügel in Bewegungsrichtung des Demontageelements aus dem Kupplungsbauteil herausgeschoben wird. Da der Verriegelungsbügel im übrigen mit den beiden Schenkeln ein Gehäuseteil des Kupplungsbauteils umgreift, kann er auch nicht quer zu der Bewegungsrichtung des Demontageelements verlagert werden. In Axialrichtung des Aufnahmekanals ist der Verriegelungsbügel durch die stirnseitigen Begrenzungen des Aufnahmeraums gehalten, so daß der Verriegelungsbügel, wenn er einmal in das Kupplungsbauteil eingesetzt ist, ohne einen entsprechenden Demontagevorgang nicht aus dem Kupplungsbauteil entfernt werden kann. Dies ist aber auch nicht erforderlich, weil der Verriegelungsbügel durch das Demontageelement ausreichend weit aufgespreizt werden kann, um den Kupplungsstutzen freizugeben.

Hierbei ist bevorzugt, daß der Gehäuseabschnitt konvex gerundet ist, wobei seine Rundung zur Stirnseite des Kupplungsbauteils hin gerichtet ist. Der Verriegelungsbügel ist aus einem Federdraht gebildet. Er läßt sich also in gewissem Umfang verformen. Zum Einsetzen des Verriegelungsbügels muß die Basis des Verriegelungsbügels an dem Gehäuseabschnitt vorbeigeführt werden können. Dies läßt sich relativ einfach dadurch erreichen, daß die Basis des Verriegelungsbügels etwas verbogen wird. Eine derartige Verbiegung führt normalerweise dazu, daß sich die Basis rund auswölbt. In diesem Zustand kann sie an dem Gehäuseabschnitt vorbeigeführt werden. Danach richtet sich die Basis wieder in ihrer ursprünglichen Form aus, so daß sie unter den Gehäuseabschnitt kommt und dann vom Gehäuseabschnitt gehalten werden kann.

Vorzugsweise läuft das Gehäuse an seiner Stirnseite bis in die Höhe des Gehäuseabschnitts und weist im Bereich der größten Ausdehnung des Gehäuseabschnitts eine Unterbrechung auf. Durch die Unterbrechung kann dann die Basis geführt werden. Im übrigen dient die stirnseitige Verlängerung des Gehäuses dazu, daß der Verriegelungsbügel nicht in Richtung der Stirnseite aus dem Gehäuse des Kupplungsbauteils herausgenommen werden kann.

Bevorzugterweise weist die Halterippe auf der der Verriegelungsfläche gegenüberliegenden Seite eine abgeschrägte Flanke auf. Diese Flanke kann verwendet werden, um den Verriegelungsbügel, genauer gesagt seinen Schenkel oder seine beiden Schenkel, nach außen zu spreizen, wenn der Kupplungsstutzen in das Kupplungsbauteil eingesetzt wird. Sobald die beiden Schenkel ausreichend weit aufgespreizt worden sind, kann man den Kupplungsstutzen bis zum Anschlag in das Kupplungsbauelement einsetzen. Danach federn die Schenkel hinter die Halterippe zurück und der Kupplungsstutzen ist zunächst unlösbar in dem Kupplungsbauteil gehalten. Erst wenn man durch Verwendung des Demontageelements die beiden Schenkel des Verriegelungsbügels wieder spreizt, kann man den Kupplungsstutzen entfernen. Hierzu ist aber eine bewußte Aktion erforderlich, so daß praktisch keine Gefahr einer Selbstöffnung besteht.

Alternativ oder zusätzlich dazu kann vorgesehen sein, daß der Schenkel auf seiner der Öffnung zugewandten Seite abgeschrägt ist. In diesem Fall kann man auch eine Halterippe verwenden, die nicht mit einer abgeschrägten Flanke versehen ist, sondern beispielsweise einen rechteckförmigen Querschnitt aufweist. In diesem Fall wird die zum Spreizen der Schenkel notwendige Hangabtriebskraft über die Abschrägung des Schenkels erzeugt.

Auch ist von Vorteil, wenn der Verriegelungsbügel aus Metall und das Demontageelement aus einem Kunststoff gebildet ist. Mit einem Metall lassen sich bei kleiner Baugröße die gewünschten Federeigenschaften realisieren. Auch ist ein Metall in der Regel fest genug, um mögliche Zugkräfte aufnehmen zu können, die auf den Kupplungsstutzen wirken. Zum Lösen der Verriegelung sind geringere Kräfte erforderlich. Dementsprechend läßt sich zum Entriegeln ein Kunststoff-Bauteil verwenden. Es ist ohne Schwierigkeiten möglich, eine Materialpaarung aus einem Kunststoff und einem Metall zu finden, die reibungsarm aneinander gleiten können.

Die Erfindung wird im folgenden anhand von bevorzugten Ausführungsbeispielen in Verbindung mit der Zeichnung beschrieben. Hierin zeigen:
- Fig. 1: einen Längsschnitt I-I nach Fig. 2,
- Fig. 2: einen Schnitt II-II nach Fig. 1 ohne Kupplungsstutzen,
- Fig. 3: das Kupplungsbauelement in perspektivischer Darstellung und
- Fig. 4: eine abgewandelte Ausführungsform eines Verriegelungsbügels im Schnitt.

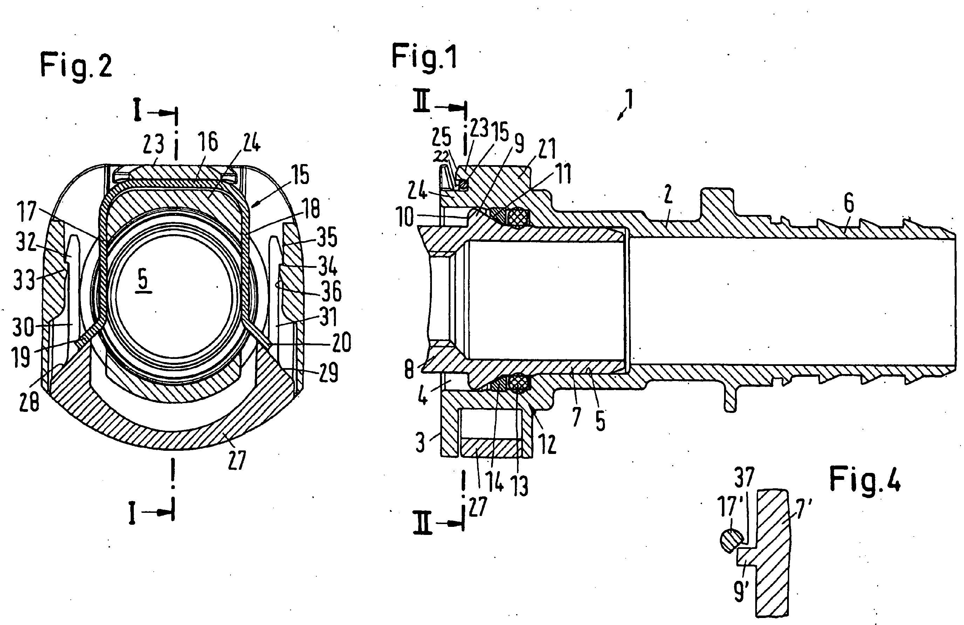

Fig. 1 zeigt eine Steckkupplung 1 im Längsschnitt. Die Steckkupplung 1 weist ein Kupplungsbauteil 2 auf, das an seiner Stirnseite 3 eine Öffnung 4 aufweist. Die Öffnung 4 setzt sich in einem Aufnahmekanal 5 fort.

Das Kupplungsbauteil 2 ist mit einem Anschlußstutzen 6 verbunden, auf dem in an sich bekannter Weise eine Fluidleitung, beispielsweise ein Schlauch, befestigt werden kann.

Durch die Öffnung 4 in den Aufnahmekanal 5 eingesetzt ist ein Kupplungsstutzen 7. Der Kupplungsstutzen 7 ist mit einem aus dem Kupplungsbauteil 2 herausragenden Anschlußteil 8 verbunden, an dem in nicht näher dargestellter Weise ebenfalls ein Schlauch oder eine andere Fluidleitung befestigt werden kann. Das Anschlußteil 8 kann auch Bestandteil eines Aggregats sein, beispielsweise eines Kühlers in einem Kraftfahrzeug.

Der Kupplungsstutzen weist eine umlaufende Halterippe 9 auf, die auf ihrer dem Anschlußteil 8 zugewandten Seite eine Verriegelungsfläche 10 bildet. Die Halterippe 9 kann in Umfangsrichtung auch unterbrochen sein.

Auf ihrer der Verriegelungsfläche 10 gegenüberliegenden Seite weist die Halterippe 9 eine abgeschrägte Flanke 11 auf.

Eine Dichtungsanordnung 12 ist zwischen dem Kupplungsstutzen 7 und dem Kupplungsbauteil 2 angeordnet. Die Dichtungsanordnung 12 weist einen Rundschnurdichtring 13 und einen Haltering 14 auf. Die Dichtungsanordnung 12 kann jedoch auch eine beliebige andere Ausgestaltung haben, solange sichergestellt ist, daß an der Verbindungsstelle zwischen dem Kupplungsbauteil 2 und dem Kupplungsstutzen 7 kein Fluid entweichen kann.

Der Kupplungsstutzen 7 wird in der in Fig. 1 dargestellten Position festgehalten durch einen Verriegelungsbügel 15, der U-förmig ausgestaltet ist und eine Basis 16 und zwei an die Basis 16 anschließende Schenkel 17, 18 aufweist. Jeder Schenkel 17, 18 weist an seinem Ende einen abgewinkelten Abschnitt 19, 20 auf. Der Verriegelungsbügel 15 ist aus einem Federdraht gebildet, so daß die beiden Schenkel 17, 18 gegenüber der Basis 16 federn können. In Fig. 2 ist eine Ruhestellung dargestellt. Aus dieser Ruhestellung heraus können die beiden Schenkel 17, 18 nach außen gespreizt werden.

Der Verriegelungsbügel 15 ist im Gehäuse 21 des Kupplungsbauteils 2 in einem Aufnahmeraum 22 angeordnet. Der Aufnahmeraum 22 ist durch einen Gehäuseabschnitt 23 überdeckt. Der Verriegelungsbügel 15 ist mit seiner Basis 16 zwischen dem Gehäuseabschnitt 23 und einer den Aufnahmekanal 15 umgebenden Ringwand 24 eingesetzt, d.h. der Verriegelungsbügel 15 kann nicht oder nur in geringem Maße parallel zur Erstreckung der Schenkel 17, 18 bewegt werden.

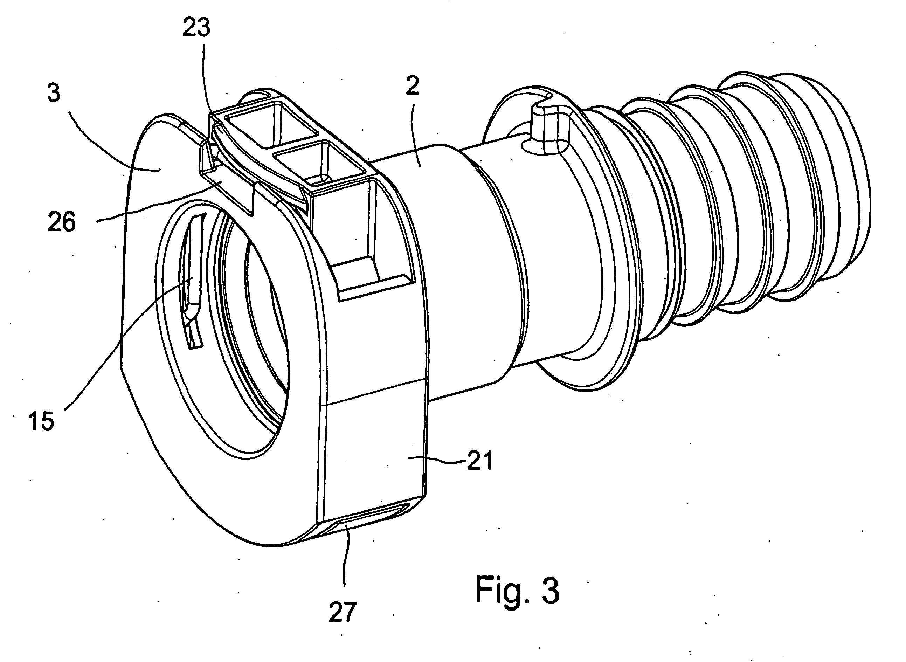

Der Gehäuseabschnitt 23 weist an seiner Stirnseite eine Abschrägung 25 auf. Ferner ist er, wie insbesondere aus Fig. 3 zu erkennen ist, konvex abgerundet, wobei er in Richtung auf die Stirnseite 3 vorsteht. Das Gehäuse 21 ist an seiner Stirnseite 3 bis in die Höhe des Gehäuseabschnitts 23 verlängert. Allerdings weist die Stirnseite 3 im Bereich des Gehäuseabschnitts 23 eine Unterbrechung 26 auf. Beim Einsetzen des Verriegelungsbügels 15 in das Kupplungsbauteil 2 muß die Basis 16 des Verriegelungsbügels 15 etwas gebogen werden, so daß ihre Krümmung dem Bogen des Gehäuseabschnitts 23 entspricht. Wenn die Basis 16 dann den Gehäuseabschnitt 23 passiert hat und sich der Verriegelungsbügel 15 entspannen kann, dann kommt die Basis 16, wie in den Fig. 1 und 2 dargestellt, zwischen der Ringwand 24 und dem Gehäuseabschnitt 23 zu liegen.

Auf der der Basis 16 gegenüberliegenden Seite ist ein Demontageelement 27 in das Gehäuse 21 eingesetzt. Das Demontageelement 27 ist aus Kunststoff gebildet. Es ist als Schieber ausgebildet, der in Richtung auf die Basis 16 verschoben werden kann, also in das Gehäuse 21 des Kupplungsbauteils 2 hinein.

Das Demontageelement 27 weist zwei Schrägflächen 28, 29 auf, die mit den abgewinkelten Abschnitten 19, 20 des Verriegelungsbügels 15 zusammenwirken. Vorzugsweise haben zumindest in der in Fig. 2 dargestellten Ruheposition die beiden Abschnitte 19, 20 und die zugeordneten Schrägflächen 28, 29 die gleiche Neigung, beispielsweise 45° zur Bewegungsrichtung.

Wenn nun das Demontageelement 27 auf die Basis 16 des Verriegelungsbügels 15 zu bewegt wird, dann drücken die beiden Schrägflächen 28, 29 die beiden Abschnitte 19, 20 und damit die beiden Schenkel 17, 18 des Verriegelungsbügels 15 auseinander. Der Abstand zwischen den beiden Schenkeln 17, 18 vergrößert sich. Der Aufnahmeraum 22 bietet genügend Platz, so daß die beiden Schenkel 17, 18 relativ weit auseinandergespreizt werden können. Der gesamte Spreizvorgang findet aber im Innern des Gehäuses 21 statt, so daß keine Teile des Verriegelungsbügels 15 nach außen vorstehen.

Das Demontageelement 27 weist zwei Beine 30, 31 auf. Diese beiden Beine 30, 31 sind in Axialrichtung des Aufnahmekanals 5 hinter dem Verriegelungsbügel 15 angeordnet. Bezogen auf die Darstellung der Fig. 1 ist dies rechts vom Verriegelungsbügel 15. Die Beine 30, 31 setzen also der Spreizbewegung der Abschnitte 17, 18 des Verriegelungsbügels 15 keinen Widerstand entgegen.

Jedes Bein 30, 31 weist an seinem Ende einen ersten Vorsprung 32 auf. Der erste Vorsprung 32 wirkt mit einem zweiten Vorsprung 33 im Gehäuse 21 des Kupplungsbauteils 2 zusammen. Die beiden Vorsprünge 32, 33 liegen dann mit einer im wesentlichen senkrecht zur Bewegungsrichtung des Demontageelements 27 verlaufenden Haltefläche aneinander. Auf der der Haltefläche 34 gegenüberliegenden Seite weist der erste Vorsprung 32 eine Abschrägung 35 auf. In ähnlicher Weise weist der zweite Vorsprung 33 auf der der Haltefläche 34 gegenüberliegenden Seite ebenfalls eine Abschrägung 36 auf. Wenn das Demontageelement 27 in das Gehäuse 21 eingesetzt wird, dann federn die beiden Beine 30, 31 etwas nach innen, so daß die ersten Vorsprünge 32 an den zweiten Vorsprüngen 33 vorbeigleiten können und dann in der in Fig. 2 dargestellten Position hinter den zweiten Vorsprüngen 33 einrasten.

Das Demontageelement 27 ist also formschlüssig im Gehäuse 21 des Kupplungsbauteils 2 gehalten, wobei das Zusammenwirken der Vorsprünge 32, 33 sicherstellt, daß das Demontageelement 27 nicht aus dem Gehäuse 21 des Kupplungsbauteils 2 herausbewegt werden kann, sondern in seiner äußersten Position die Kontur des Demontageelements 27 der Kontur des Gehäuses 21 folgt.

Wenn nun der Kupplungsstutzen 7 in das Kupplungsbauteil 2 eingesetzt wird, dann spreizt die Flanke 11 der Halterippe 9 die beiden Schenkel 17, 18 auseinander, so daß die Halterippe 9 an dem Verriegelungsbügel 15 vorbeigeführt werden kann. Wenn die Halterippe 9 an den beiden Schenkeln 17, 18 vorbeigetreten ist, dann federn die beiden Schenkel 17, 18 zurück und greifen dann hinter die Verriegelungsfläche 10. Der Kupplungsstutzen 7 ist dann zunächst unlösbar im Kupplungsbauteil 2 gehalten.

Um den Kupplungsstutzen 7 wieder aus dem Kupplungsbauteil 2 herausziehen zu können, wird einfach das Demontageelement 27 in Richtung auf die Basis 16 des Verriegelungsbügels 15 gedrückt. Dabei spreizt das Demontageelement 27 die beiden Schenkel 17, 18 so weit auseinander, daß sie von der Verriegelungsfläche 10 freikommen und die Halterippe 9 zwischen den beiden Schenkeln 17, 18 durchtreten kann. In diesem Zustand kann der Kupplungsstutzen 7 aus dem Kupplungsbauelement 2 herausgezogen werden.

Das Demontageelement 27 kann einfach durch den Druck eines Fingers in das Gehäuse 21 eingedrückt werden. Wenn die Kraft auf das Demontageelement 27 nachläßt, dann drücken die Schenkel 17, 18, die nach innen federn, das Demontageelement 27 wieder in die in Fig. 2 dargestellte Ausgangsposition, in der die beiden Vorsprünge 32, 33 aneinander anliegen.

Bei der Ausgestaltung der Fig. 1 ist die Halterippe 9 mit einer Flanke 11 versehen, um die Schenkel 17, 18 des Verriegelungsbügels 15 auseinanderzuspreizen.

Fig. 4 zeigt zwei Elemente einer abgewandelten Ausführungsform einer Steckkupplung im Ausschnitt, bei der Teile, die denen der Fig. 1 und 2 entsprechen, mit gestrichenen Bezugszeichen versehen sind.

Hier weist ein Anschlußstutzen 7' eine Halterippe 9' mit im wesentlichen rechteckförmigem Querschnitt auf. Der Schenkel 17 des Verriegelungsbügels 15 ist dafür mit einer Schrägfläche 37 versehen, so daß er bei einem durch die Halterippe 9' ausgeübten Druck ebenfalls nach außen verschwenkt werden kann.

Der Verriegelungsbügel 15 ist vorzugsweise aus einem Federstahl gebildet und das Demontageelement 27 aus einem Kunststoff, der mit dem Federstahl reibungsarm zusammenwirkt. Damit kann man ein Selbstöffnen zuverlässig vermeiden. Die Betätigung zum bewußten Öffnen der Steckkupplung wird einfach. Das Gewicht der Steckkupplung bleibt klein.

## Patentansprüche

1. Steckkupplung zum Verbinden zweier Fluidleitungen mit einem Kupplungsbauteil, das eine Öffnung mit einem daran anschließenden Aufnahmekanal aufweist, und einem Kupplungsstutzen, der in den Aufnahmekanal eingesteckt ist und eine von seinem Umfang nach außen vorstehende und eine Verriegelungsfläche bildende Halterippe aufweist, mit der ein Verriegelungsbügel zusammenwirkt, der mindestens einen parallel zur Öffnungsebene federnden Schenkel aufweist, wobei ein Demontageelement in einer parallel zur Öffnungsebene verlaufenden Richtung verschiebbar im Kupplungsbauteil gelagert ist, wobei das Demontageelement in einer parallel zur Öffnungsebene verlaufenden Richtung auf den Schenkel wirkt, **dadurch gekennzeichnet, daß** der Verriegelungsbügel (15) U-förmig mit zwei Schenkeln (17, 18) und einer Basis (16) ausgebildet ist und das Demontageelement (27) in einer Richtung senkrecht zur Basis (16) verschiebbar ist, wobei lediglich die Basis des Verriegelungsbügels (15) formschlüssig im Kupplungsbauteil (2) gehalten ist.

2. Steckkupplung nach Anspruch 1, **dadurch gekennzeichnet, daß** das Kupplungsbauteil (2) einen Aufnahmeraum für den Verriegelungsbügel (15) aufweist, der auf der dem Demontageelement (27) gegenüberliegenden Seite von einem Gehäuseabschnitt (23) überdeckt ist.

3. Steckkupplung nach Anspruch 2, **dadurch gekennzeichnet, daß** der Gehäuseabschnitt (23) konvex gerundet ist, wobei seine Rundung zur Stirnseite (3) des Kupplungsbauteils (2) hin gerichtet ist.

4. Steckkupplung nach Anspruch 3, **dadurch gekennzeichnet, daß** das Gehäuse (21) an seiner Stirnseite (3) bis in die Höhe des Gehäuseabschnitts (23) verläuft und im Bereich der größten Ausdehnung des Gehäuseabschnitts (23) eine Unterbrechung (26) aufweist.

5. Steckkupplung nach einem der Ansprüche 1 bis 4, **dadurch gekennzeichnet, daß** das Demontageelement (27) mindestens eine mit dem Schenkel zusammenwirkende Schrägfläche (28, 29) aufweist.

6. Steckkupplung nach einem der Ansprüche 1 bis 5, **dadurch gekennzeichnet, daß** der Schenkel (17, 18) einen nach außen abgewinkelten Abschnitt (19, 20) aufweist, auf den das Demontageelement (27) wirkt.

7. Steckkupplung nach einem der Ansprüche 1 bis 6, **dadurch gekennzeichnet, daß** das Demontageelement (27) formschlüssig im Kupplungsbauteil (2) gehalten ist.

8. Steckkupplung nach Anspruch 7, **dadurch gekennzeichnet, daß** das Demontageelement (27) mindestens ein quer zu seiner Bewegungsrichtung federndes Bein (30, 31) aufweist, an dem ein erster Vorsprung (32) angeordnet ist, der mit einem zweiten Vorsprung (33) im Kupplungsbauteil (2) zusammenwirkt.

9. Steckkupplung nach Anspruch 8, **dadurch gekennzeichnet, daß** die beiden Vorsprünge (32, 33) jeweils auf einer Seite eine senkrecht zur Bewegungsrichtung verlaufende Haltefläche (34) und auf der in Bewegungsrichtung gegenüberliegenden Seite eine Abschrägung (35, 36) aufweisen.

10. Steckkupplung nach Anspruch 8 oder 9, **dadurch gekennzeichnet, daß** das Bein (30, 31) in Axialrichtung des Aufnahmekanals (5) außerhalb eines Bereichs angeordnet ist, in dem der Schenkel (17, 18) angeordnet ist.

11. Steckkupplung nach einem der Ansprüche 7 bis 10, **dadurch gekennzeichnet, daß** das Demontageelement (27) in eine Richtung aus dem Kupplungsbauteil (2) heraus maximal bis in eine Position bewegbar ist, in der es mit der Außenkontur des Kupplungsbauteils (2) abschließt.

12. Steckkupplung nach einem der Ansprüche 1 bis 11, **dadurch gekennzeichnet, daß** die Halterippe (9) auf der der Verriegelungsfläche (10) gegenüberliegenden Seite eine abgeschrägte Flanke (11) aufweist.

13. Steckkupplung nach einem der Ansprüche 1 bis 12, **dadurch gekennzeichnet, daß** der Schenkel (17') auf seiner der Öffnung zugewandten Seite abgeschrägt ist.

14. Steckkupplung nach einem der Ansprüche 1 bis 13, **dadurch gekennzeichnet, daß** der Verriegelungsbügel (15) aus Metall und das Demontageelement (27) aus einem Kunststoff gebildet ist.

## Claims

1. Plug-in coupling for connecting two fluid lines, comprising a coupling component having an opening and an adjacent receiving duct, and a coupling piece inserted into the receiving duct and having a holding rib protruding from a circumference thereof outwardly and forming a locking surface with which a locking stirrup interacts having at least one leg which is resilient parallel to the plane of the opening, wherein a disassembly element is mounted in the coupling component movably in a direction parallel to the plane of the opening, wherein the disassembly element acts on the leg in a direction running parallel to the plane of the opening **characterized in that** the locking stirrup (15) is U-shaped with two legs (17, 18) and a base (16) connecting the two legs, and the disassembly element (27) is mounted so as to be slidable in a direction extending perpendicularly to the base (16), wherein only the base of the locking stirrup (15) is held with positive locking engagement in the coupling component (2).

2. Plug-in coupling according to claim 1, **characterized in that** the coupling component (2) has a receiving space for the locking stirrup (15), which is covered on a side opposite the disassembly element (27) by a housing section (23).

3. Plug-in coupling according to claim 2, **characterized in that** the housing section (23) is convexly rounded, wherein the rounded portion is directed toward an end face (3) of the coupling component (2).

4. Plug-in coupling according to claim 3, **characterized in that** the housing (21) extends at an end face (3) thereof up to a level of the housing section (23), and has a recess (26) in an area of greatest extension of the housing section (23).

5. Plug-in coupling according to one of claims 1 to 4, **characterized in that** the disassembly element (27) has at least one inclined surface (28, 29) interacting with the leg.

6. Plug-in coupling according to one of claims 1 to 5, **characterized in that** the leg (17,18) has an outwardly angled section (19, 20) on which the disassembly element (27) acts.

7. Plug-in coupling according to one of claims 1 to 6, **characterized in that** the disassembly element (27) is held with positively locking engagement in the coupling component (2).

8. Plug-in coupling according to claim 7, **characterized in that** the disassembly element (27) has at least one leg (30, 31) which is resilient transversely of the direction of movement thereof, having a first projection (32) interacting with a second projection (33) on the coupling component (2).

9. Plug-in coupling according to claim 8, **characterized in that** the both projections (32, 33) each have a support surface (34) extending perpendicularly of the direction of movement on one side, and have an inclined surface (35, 36) on the oppositely located side in the direction of movement.

10. Plug-in coupling according to claim 8 or 9, **characterized in that** the leg (30, 31) is arranged in the axial direction of the receiving duct (5) outside of an area in which the leg (17, 18) is located.

11. Plug-in coupling according to one of claims 7 to 10, **characterized in that** the disassembly element (27) is movable in a direction out of the coupling component (2) at most up to a position in which the disassembly element (27) is flush with the outer contour of the coupling component (2).

12. Plug-in coupling according to one of claims 1 to 11, **characterized in that** the holding rib (9) has an inclined surface (11) on a side located opposite the locking surface (10).

13. Plug-in coupling according to one of claims 1 to 12, **characterized in that** the leg (17') is inclined on his side facing the opening.

14. Plug-in coupling according to one of claim 1 to 15, **characterized in that** the locking stirrup (15) is of metal and the disassembly element (27) is of a synthetic material.

## Revendications

1. Raccord enfichable servant à raccorder deux conduites de fluide à un élément d'accouplement, qui présente une ouverture avec un canal de réception s'y raccordant, et une tubulure d'accouplement, qui est enfichée dans le canal de réception et présente une nervure de retenue en saillie de sa périphérie vers l'extérieur et formant une surface de verrouillage, avec laquelle nervure coopère un étrier de verrouillage, qui présente au moins une branche élastique parallèlement au plan d'ouverture, un élément de démontage étant logé dans l'élément d'accouplement de manière mobile dans une direction parallèle au plan d'ouverture, l'élément de démontage agissant sur la branche dans une direction parallèle au plan d'ouverture, **caractérisé en ce que** l'étrier de verrouillage (15) est réalisé en forme de U avec deux branches (17, 18) et une base (16), et l'élément de démontage (27) est mobile dans une direction perpendiculaire à la base (16), seule la base de l'étrier de verrouillage (15) étant retenue par correspondance de forme dans l'élément d'accouplement (2).

2. Raccord enfichable selon la revendication 1, **caractérisé en ce que** l'élément d'accouplement (2) présente un espace de réception pour l'étrier de verrouillage (15), qui est recouvert sur le côté opposé à l'élément de démontage (27) par une partie de boîtier (23).

3. Raccord enfichable selon la revendication 2, **caractérisé en ce que** la partie de boîtier (23) est arrondie de manière convexe, son arrondi étant dirigé vers la face frontale (3) de l'élément d'accouplement (2).

4. Raccord enfichable selon la revendication 3, **caractérisé en ce que** le boîtier (21) s'étend au niveau de sa face frontale (3) jusqu'à la hauteur de la partie de boîtier (23) et présente une interruption (26) dans la zone de la plus grande dimension de la partie de boîtier (23).

5. Raccord enfichable selon l'une quelconque des revendications 1 à 4, **caractérisé en ce que** l'élément de démontage (27) présente au moins une surface biseautée (28, 29) coopérant avec la branche.

6. Raccord enfichable selon l'une quelconque des revendications 1 à 5, **caractérisé en ce que** la branche (17, 18) présente une section (19, 20) coudée vers l'extérieur, sur laquelle agit l'élément de démontage (27).

7. Raccord enfichable selon l'une quelconque des revendications 1 à 6, **caractérisé en ce que** l'élément de démontage (27) est retenu dans l'élément d'accouplement (2) par correspondance de forme.

8. Raccord enfichable selon la revendication 7, **caractérisé en ce que** l'élément de démontage (27) présente au moins un bras (30, 31) élastique transversalement à son sens de déplacement, au niveau duquel est agencée une première saillie (32), qui coopère avec une deuxième saillie (33) dans l'élément d'accouplement (2).

9. Raccord enfichable selon la revendication 8, **caractérisé en ce que** les deux saillies (32, 33) présentent respectivement d'un côté, une surface de retenue (34) s'étendant perpendiculairement au sens de déplacement et un biseau (35, 36) sur le côté opposé au sens de déplacement.

10. Raccord enfichable selon la revendication 8 ou 9, **caractérisé en ce que** le bras (30, 31) est agencé dans la direction axiale du canal de réception (5) à l'extérieur d'une zone, dans laquelle est disposée la branche (17, 18).

11. Raccord enfichable selon l'une quelconque des revendications 7 à 10, **caractérisé en ce que** l'élément de démontage (27) peut être déplacé dans une direction hors de l'élément d'accouplement (2) au maximum jusqu'à une position, dans laquelle il termine le contour extérieur de l'élément d'accouplement (2).

12. Raccord enfichable selon l'une quelconque des revendications 1 à 11, **caractérisé en ce que** la nervure de retenue (9) présente un flanc (11) biseauté sur le côté opposé à la surface de verrouillage (10).

13. Raccord enfichable selon l'une quelconque des revendications 1 à 12, **caractérisé en ce que** la branche (17') est biseautée sur son côté tourné vers l'ouverture.

14. Raccord enfichable selon l'une quelconque des revendications 1 à 13, **caractérisé en ce que** l'étrier de verrouillage (15) est réalisé en métal, et l'élément de démontage (27) en un plastique.
